# EUROPÄISCHE PATENTSCHRIFT

(11) **EP 0 791 427 B1**
(45) Veröffentlichungstag und Bekanntmachung des Hinweises auf die Patenterteilung: **11.10.2000**
(21) Anmeldenummer: 97100082.3
(22) Anmeldetag: 04.01.1997
(51) Int. Cl.: B23Q 7/04

(54) **Werkstückgreifer**
Gripper for workpieces
Dispositif de préhension pour pièces

(30) Priorität: 24.02.1996 DE 19607001
(43) Veröffentlichungstag der Anmeldung: 27.08.1997
(73) Patentinhaber: CHIRON-WERKE GMBH & CO. KG, 78532 Tuttlingen (DE)
(72) Erfinder: Schweizer, Anton, 78573 Wurmlingen (DE)
(74) Vertreter: Otten, Hajo, Dr.-Ing.

(56) Entgegenhaltungen:
- EP-A- 0 215 209
- DE-A- 3 620 343
- DE-A- 19 523 787
- US-A- 4 555 844
- US-A- 4 571 814
- PATENT ABSTRACTS OF JAPAN vol. 006, no. 106 (M-213), 10.Mai 1983 & JP 58 028448 A (KOGYO GIJUTSUIN;OTHERS: 0J), 19.Februar 1983,

## Beschreibung

Die vorliegende Erfindung betrifft einen Werkstückgreifer mit einem Gehäuseteil, an dem ein fremdkraftbetätigtes Greiferelement zum Ergreifen von Werkstücken anzuordnen ist, und mit einem Verbindungsteil zur Befestigung des Werkstückgreifers an einem Werkzeughalter, der mittels einer Werkzeugwechselvorrichtung zwischen einer Magazinstellung an einer Werkzeugmaschine und einer Arbeitsstellung an einer Aufnahme in einer in einem Spindelstock drehbar gelagerten Spindel der Werkzeugmaschine überführbar ist, wobei an dem Gehäuseteil ein Anschlußelement vorgesehen ist, das bei in der Aufnahme befindlichem Werkzeughalter mit einem an dem Spindelstock vorgesehenen Verbindungselement zum Zuführen von Energie zur Betätigung des Greiferelementes derart in Eingriff ist, daß das Gehäuseteil gegenüber dem Spindelstock drehfest gehalten ist.

Ein derartiger Werkstückgreifer ist aus der DE 36 20 343 C2 bekannt.

Der bekannte Werkstückgreifer ist für eine Werkzeugmaschine mit einer sogenannten variablen Wechselebene vorgesehen, bei der ein Magazin zur Aufnahme von Werkzeugen und Werkstückgreifern zusammen mit dem Spindelstock verfahrbar ist. Die Werkzeugmaschine weist zwei Werkzeugwechselvorrichtungen auf, über die im Gegentakt Werkzeuge und/oder Werkstückgreifer in die Aufnahme in der Spindel eingewechselt bzw. ausgewechselt werden können.

Jedesmal dann, wenn ein neues Werkstück der Bearbeitung zugeführt werden soll, wird der bekannte Werkstückgreifer in die Spindel eingewechselt, woraufhin der Spindelstock dann zunächst das gerade fertig bearbeitete Werkstück anfährt und der Werkstückgreifer so betätigt wird, daß er das fertig bearbeitete Werkstück aufnimmt. Der Spindelstock fährt dann ein Werkstückmagazin an, wo der Werkstückgreifer das fertige Werkstück ablegt und ein neu zu bearbeitendes Werkstück aufnimmt. Der Spindelstock fährt daraufhin in die Arbeitsposition zurück, wo das neue Werkstück z.B. in einen Teilapparat eingespannt wird. Danach wird der Werkstückgreifer gegen das als erstes zu verwendende Werkzeug ausgetauscht.

Bei dieser Werkzeugmaschine sind sowohl der Werkstückgreifer als auch die Werkzeuge mit standardisierten Werkzeughaltern mit Steilkegel versehen. Diese Steilkegel gehen in einen Flansch über, der eine umlaufende Greifernut aufweist, an der die Werkzeugwechselvorrichtungen mit ihren Greiferhänden angreifen und den Werkzeughalter transportieren können. Der bekannte Werkstückgreifer unterscheidet sich somit für die Werkzeugwechselvorrichtung nicht von einem üblichen Werkzeug.

An dem Werkstückwechsler sind fremdkraftbetätigte Spannbacken vorgesehen, die in ihre Schließstellung durch eine Druckfeder vorgespannt sind. Das Öffnen der Spannbacken erfolgt über ein Betätigungsfluid, das durch Fluidkanäle geleitet wird, die in dem Gehäuseteil des bekannten Werkstückwechslers vorgesehen sind. Dieses Gehäuseteil ist einstückig ausgebildet und an seinem oberen Ende zur Befestigung an dem Flansch des Werkzeughalters sowie an seinem unteren Ende zur Aufnahme der Spannbacken ausgebildet. An seinem oberen Ende weist dieses Gehäuseteil ferner eine Nase auf, in deren Oberseite der Fluidkanal mündet.

An dem Spindelstock ist ein entsprechendes Verbindungselement vorgesehen, in das die Nase eingreift, wenn der Werkstückwechsler in die Aufnahme der Spindel eingewechsel wird. In diesem Verbindungselement ist ein weiterer Fluidkanal vorgesehen, über den das Betätigungsfluid zu den Spannbacken geleitet wird, die durch Anlegen eines Fluiddruckes geöffnet werden können.

Über die Nase und das Verbindungselement ist das Gehäuseteil unverdrehbar an dem Spindelstock gehalten. Ein Drehen des von dem Werkstückwechsler gehaltenen Werkstückes ist bei dieser Konstruktion nicht möglich.

In der DE 36 20 343 C2 ist jedoch erwähnt, daß die Fluidzuführ nicht über die gesonderte Nase sowie das dafür vorgesehene Verbindungselement an dem Spindelstock, sondern direkt durch die Drehachse der Spindel hindurch erfolgen kann. Bei dieser Konstruktion steht das Gehäuseteil folglich nicht in Verbindung mit dem Spindelstock, so daß durch Drehen der Spindel auch das gehaltene Werkstück gedreht werden kann.

Die Fluidzufuhr erfolgt hier durch die Achse der Spindel und durch den Steilkegel des Werkzeughalters hindurch, so daß kein genormter Werkzeughalter mehr verwendet werden kann. Ferner sind bei dieser Konstruktion umfangreiche konstruktive Änderungen an der Werkzeugmaschine selbst erforderlich. Eine genaue Beschreibung, wie die Werkzeugmaschine dementsprechend auszulegen ist, findet sich in der genannten Patentschrift jedoch nicht.

Aus der EP 0 088 644 ist eine ähnliche Konstruktion bekannt, bei der an einem Werkzeughalter ein Werkstückwechsler angeordnet ist, der fremdkraftbetätigte Backen aufweist. Der Werkzeughalter wird in eine Aufnahme in einer Spindel eingeschraubt, wobei in der Spindel eine axiale Stange vorgesehen ist, über die die Spannbacken des Werkstückgreifers betätigt werden.

Auch bei dieser Konstruktion ist eine speziell angepaßte Werkzeugmaschine erforderlich, die einen Antrieb zum Einschrauben des Werkzeughalters in die Aufnahme sowie einen weiteren Antrieb zur Betätigung der Spannbacken benötigt, wobei ferner ein weiterer Antrieb für die Spindel selbst erforderlich ist.

Auch bei dieser Anordnung ist von Nachteil, daß keine standardisierten Werkzeughalter verwendet werden können und daß die Werkzeugmaschine selbst speziell zur Aufnahme und Betätigung eines Werkstückgreifers ausgebildet sein muß.

Insgesamt ist es jedoch so, daß derartige Werkzeugmaschinen häufig Spezialmaschinen sind, die für den jeweiligen Anwendungszweck, z.B. zum Ausbohren von Felgenlöchern konstruiert und angeschafft werden. Um die Kosten derartiger Spezialmaschinen gering zu halten, wird dabei auf standardisierte Baugruppen zurückgegriffen, zu denen u.a. der Spindelstock mit darin drehbar gelagerter Spindel, die Werkzeugwechsler, das Werkzeugmagazin etc. zählen. In einigen Anwendungsfällen ist es bei derartigen Spezialmaschinen erforderlich, in dem Werkzeugmagazin einen Werkstückgreifer vorrätig zu halten, während für andere Anwendungen der Einsatz eines Werkstückgreifers nicht geplant ist.

Dabei ist von Nachteil, wenn bei derartigen Spezialmaschinen unterschiedliche Standardbaugruppen verwendet werden müssen, wenn die Maschinen einen Werkstückgreifer verwendet oder aber nicht. Natürlich wäre es möglich, diese Standardbaugruppen jeweils so auszulegen, daß ein Werkstückgreifer eingesetzt werden könnte, dies würde jedoch wegen der oben beschriebenen komplizierteren Ausgestaltung dazu führen, daß diese Standardbaugruppen insgesamt teurer würden, was sich dann auch bei solchen Werkzeugmaschinen niederschlagen würde, die gar keinen Werkstückgreifer benötigen.

Während also der gattungsbildende Werkstückwechsler den Vorteil aufweist, daß er zusammen mit standardisierten Baugruppen verwendet werden kann, weisen die drehbaren Werkstückgreifer den Vorteil auf, daß die Werkstücke selbst nach dem Greifen lagerichtet positioniert oder sogar während der Bearbeitung in der Spindel gehalten werden können. Gerade der letztere Fall wird benötigt, wenn z.B. mit einem Schneideisen eine rotationssymmetrische Form an dem Werkstück ausgebildet werden soll.

Ein Beispiel für die Verwendung eines sich drehenden Werkstückes findet sich in der bereits erwähnten EP 0 088 644 A1. Die dort beschriebene Werkzeugmaschine ist mit zwei koaxialen Spindeln versehen, deren Aufnahmen sich aufeinander zu öffnen. Beim Betrieb der bekannten Maschine ist jeweils eine der Spindeln in Drehrichtung arretiert, während sich die andere Spindel dreht. Soll z.B. ein Werkstück abgedreht werden, so wird der Werkstückhalter mit samt dem Werkstück in die zur Rotations freigegebene Spindel eingesetzt, während der mit einem Drehstahl bestückte Werkzeughalter in die drehstarr arretierte Spindel eingesetzt wurde. Wenn jedoch das Werkstück gefräst werden soll, ist die Anordnung entsprechend umgekehrt, so daß das Werkstück still steht und sich der Fräser dreht.

Bei einer derartigen Werkzeugmaschine ist selbstverständlich von Nachteil, daß zwei Spindeln benötigt werden.

Aus der US 4,555,844 A ist eine Werkzeugmaschine mit einem Werkstückgreifer bekannt, der über einen Standard-Werkzeughalterkegel drehfest in die Spindel eingesetzt werden kann. Der Werkstückgreifer umfaßt ein Umlenkgetriebe, eine Kupplung sowie Anschläge, um auf nicht beschriebene Weise eine 180°-Drehung eines Werkstückes zu bewerkstelligen.

Vor diesem Hintergrund ist Aufgabe der vorliegenden Erfindung, durch konstruktiv einfache Maßnahmen dafür zu sorgen, daß die Vorteile der beiden oben beschriebenen Konstruktionsvarianten genutzt werden können, daß also einerseits standardisierte Baugruppen verwendet werden können und andererseits das Werkstück drehbar ist.

Erfindungsgemäß wird diese Aufgabe dadurch gelöst, daß bei dem eingangs genannten Werkstückgreifer ein an dem Gehäuseteil drehbar gelagerter Adapter vorgesehen ist, an dem das Greiferelement befestigbar ist.

Die der Erfindung zugrundeliegende Aufgabe wird auf diese Weise vollkommen gelöst.

Der Erfinder der vorliegenden Anmeldung hat nämlich erkannt, daß es überraschenderweise nicht erforderlich ist, die Werkzeugmaschine weiterzubilden, um die genannte Vereinigung der Vorteile zu erzielen. Vielmehr ist es auf einfache Weise möglich, den Werkzeughalter sozusagen zweiteilig auszubilden, wobei das eine Teil, nämlich das Gehäuseteil, drehfest mit dem Spindelstock verbunden ist, während das andere Teil, also der Adapter, gegenüber dem Gehäuseteil drehbar ist und entsprechende Greiferelemente zum Fassen der Werkstücke tragen kann. Bei dieser Konstruktion wird also keine zusätzliche Energiezufuhr durch die Drehachse der Spindel in Form von Fluiden oder einer Zugstange benötigt, die Werkzeugmaschine und die Werkzeughalter selbst müssen also nicht verändert werden.

Es wäre zwar auch möglich, daß an dem Spindelstock vorgesehene Verbindungselement um die Spindelachse drehbar auszulegen, da diese Eigenschaft jedoch häufig nicht benötigt wird, wäre auch dies mit einer Kostenerhöhung der standardisierten Baugruppen verbunden, was aus den oben erwähnten Gründen nicht angestrebt wird. Ein weiterer Nachteil einer derartigen Konstruktion läge darin, daß dieses drehbar ausgelegte Verbindungselement deutlich stärkeren Belastungen ausgesetzt wäre als die drehbare Konstruktion bei dem Werkstückgreifer, da je nach Werkstück unterschiedliche Werkstückgreifer eingesetzt werden, bei denen dann jedoch jeweils das drehbare Verbindungselement an dem Spindelstock zum Einsatz käme.

Durch die hier gewählte Konstruktion, an dem Werkstückgreifer einen drehbar gelagerten Adapter vorzusehen, ergibt sich also eine sehr einfache Konstruktion, an die auch keine allzu großen Anforderungen zu stellen sind, da in der Regel der Werkstückgreifer während eines Bearbeitungsprozesses nur kurz zum Einsatz kommt, während die übrigen Baugruppen der Werkzeugmaschine einer deutlich höheren Belastung ausgesetzt sind.

Dabei ist es bevorzugt, wenn über das Verbindungselement Energie zur Drehung des Adapters zugeführt wird.

Hier ist von Vorteil, daß einerseits die sowieso zum Spannen der Werkstücke zugeführte Energie auch zum Drehen des Adapters verwendet werden kann. Andererseits kann natürlich auch zusätzliche Energie z.B. in Form von Strom zugeführt werden. In all diesen Fällen würde der Adapter sozusagen mit einem eigenen Motor oder einem eigenen Antrieb ausgestattet. In einer sehr einfachen Konstruktion kann der Adapter mit Anschlägen versehen sein, die seinen Drehbereich in beiden Drehrichtungen begrenzen, so daß durch einfaches Beaufschlagen des Adapters mit Druckfluid die Drehbewegung gesteuert werden kann.

Andererseits ist es jedoch bevorzugt, wenn das Verbindungsteil gegenüber dem Gehäuseteil drehbar gelagert ist und an seinem einen Ende den Adapter zur Befestigung des Greiferelementes trägt.

Hier ist von Vorteil, daß die Spindel selbst als Drehantrieb für das Greiferelement eingesetzt werden kann. Dabei wird das sehr genaue Positionieren der Spindel mit ausgenutzt, wodurch der bauliche Aufwand an dem neuen Werkstückgreifer sehr stark reduziert wird. Der Werkstückgreifer ist jetzt nämlich nicht mit einem eigenen Motor oder Anschlägen etc. auszurüsten, so daß er auch insgesamt ein geringeres Gewicht aufweisen wird als bei der oben erwähnten Variante mit gesonderter Energiezufuhr. Mit diesem geringen Gewicht ist ein weiterer Vorteil verbunden, da die Werkzeugwechsler nicht für höhere mechanische Belastungen ausgelegt werden müssen. In der Regel ist es nämlich so, daß diese Werkzeugwechsler eine sehr hohe Werkzeugwechselzeit realisieren, was nur möglich ist, wenn die Werkzeuge selbst ein relativ geringes Gewicht aufweisen. Da jetzt das Gewicht des neuen Werkstückwechslers im Bereich des Gewichtes der Werkzeuge liegt, müssen an den Werkzeugwechslern keine besonderen Maßnahmen vorgesehen sein, um z.B. den Wechselvorgang wegen der höheren Masse verlangsamt ablaufen zu lassen.

Hierbei ist es dann bevorzugt, wenn der Adapter zur Aufnahme unterschiedlicher Greiferelemente ausgebildet ist.

Bei dieser Maßnahme ist von Vorteil, daß der neue Werkzeugwechsler ein Standardteil wie z.B. Werkzeughalter mit Steilkegel wird, wobei aber eine weitere Energiezufuhr vorgesehen ist, um den Werkstückwechsler zu spannen und/oder zu drehen/positionieren.

Durch die hier vorliegende Erfindung wird also die Zahl der Standardbaugruppen für derartige Werkzeugmaschinen um eine weitere erhöht, nämlich um den neuen Werkstückwechsler, der als Standardteil zwischen einen üblichen Werkzeughalter sowie ein jeweils speziell an die Werkstücke anzupassendes Greiferelement geschaltet wird.

In einer Weiterbildung ist es bevorzugt, wenn das Gehäuseteil in Längsrichtung an dem Verbindungsteil im wesentlichen unverschieblich festgelegt ist, wobei der Adapter in einer bevorzugten Weiterbildung über eine Gleitfläche mit dem Gehäuseteil in Anlage ist und über diese Gleitfläche das Gehäuseteil auf den Spindelstock zu drückt, wenn der Werkzeughalter in die Aufnahme eingezogen ist.

Diese Maßnahme ist konstruktiv von Vorteil, weil keine zusätzlichen Maßnahmen zur Befestigung des Gehäuseteiles an dem Spindelstock erforderlich sind. Zwar wäre es möglich, zwischen Verbindungselement und Anschlußelement eine Verriegelungseinheit vorzusehen, die über eine gesonderte Kraft betätigt wird, aber dies würde wie andere oben beschriebene Maßnahmen einen größeren konstruktiven Aufwand an den Standardbaugruppen erfordern. Bei der hier gewählten Lösung wird das Gehäuseteil jetzt über Verbindungselement und Anschlußelement lediglich drehfest gehalten, während es über den eingezogenen Werkzeughalter, an dem in axialer Richtung unverschieblich der Adapter gehalten ist, in axialer Richtung festgelegt wird.

Allgemein ist es bevorzugt, wenn eine Verriegelungseinrichtung vorgesehen ist, über die der Adapter drehfest mit dem Gehäuseteil koppelbar ist, wobei die Verriegelungseinheit vorzugsweise automatisch entriegelt, wenn der Werkzeughalter in die Aufnahme eingezogen ist.

Hier ist von Vorteil, daß beim Ein- und Auswechseln des neuen Werkstückgreifers die Orientierung zwischen dem Gehäuseteil sowie dem Werkzeughalter beibehalten bleibt. Derartige Werkzeughalter sind häufig mit Nuten an dem Flansch versehen, die für ein lagerichtiges Einkoppeln des Werkzeughalters in die Aufnahme der Spindel sorgen. Wenn jetzt während dieses Einkoppelvorganges über die Verriegelungseinheit verhindert wird, daß sich das Gehäuseteil gegenüber dem Greiferelement verdreht, so ist in allen Fällen sichergestellt, daß das Verbindungselement und das Anschlußelement beim Einziehen des Werkzeughalters in die Aufnahme ineinandergreifen. Bei sich frei drehendem Gehäuseteil könnte es nämlich durchaus sein, daß durch einen gewissen radialen Versatz zwischen Anschlußelement und Verbindungselement die gewünschte Energieübertragung nicht möglich ist oder aber eine Beschädigung des Verbindungselementes bzw. des Anschlußelementes erfolgt.

In einer Ausgestaltung ist es dann bevorzugt, wenn die Verriegelungseinheit einen federbelasteten Stift umfaßt, der im verriegelten Zustand in ein entsprechendes Rastloch an dem Adapter eingreift, und wenn ein Hebelmechanismus zum Verstellen des Stiftes vorgesehen ist, wobei der Hebelmechanismus mit einem Betätigungsbolzen verbunden ist, der aus dem Gehäuseteil hervorragt und mit dem Spindelkopf in Anlage ist, wenn der Werkstückgreifer sich in seiner Arbeitsstellung befindet.

Diese Maßnahme ist konstruktiv von Vorteil, weil sie auf einfache Weise ein automatisches Entriegeln der Verriegelungseinheit ermöglicht.

Allgemein ist es bevorzugt, wenn das Verbindungsteil als Schaft ausgebildet ist, der in einer zentrischen Bohrung des Gehäuseteiles gelagert ist, in dem Anschlußelement zumindest ein Fluidkanal vorgesehen ist, der seitlich in die Bohrung mündet, und in dem Schaft ein zugeordneter Fluidkanal vorgesehen ist, der einen Endes in den Adapter führt und anderen Endes in eine an dem Schaft vorgesehene Ringnut mündet, die dem Fluidkanal in dem Gehäuseteil zugeordnet ist.

Auch diese Maßnahme ist unter konstruktiven Gesichtspunkten von Vorteil, diese Maßnahmen ermöglichen nämlich eine einfache Übertragung der Fluidenergie von dem Verbindungsteil an dem Gehäuseteil zu dem sich gegenüber diesem drehenden Adapter.

Weiter ist es bevorzugt, wenn an dem Gehäuseteil ein weiteres Anschlußelement angeordnet ist, das einem weiteren, an dem Spindelstock vorgesehenen Verbindungselement zum Zuführen von Energie zugeordnet ist, wobei hier vorzugsweise die Übergabe des Fluides von dem Gehäuseteil zu dem Adapterteil so wie oben beschrieben über Fluidkanäle mit Ringnut erfolgt.

Bei dieser Maßnahme ist von Vorteil, daß die Spannbacken aktiv geöffnet und geschlossen werden können, da zwei unterschiedliche Fluidkanäle vorgesehen sind. Diese Maßnahme ist unter sicherheitstechnischen Aspekten weiter bevorzugt, da die Spannkraft jetzt nicht mehr durch ein Federelement sondern gesteuert durch das Fluid bereitgestellt wird. Durch einen Drucksensor kann hier jetzt z.B. überwacht werden, ob die Spannbacken tatsächlich geschlossen sind. Die Überwachung von federbetätigten Spannbacken erfolgt in der Regel über einen Sensor, der im Bereich der Spannbacken selbst vorgesehen ist, wozu jedoch die Sensorinformation von dem Werkstückwechsler zu einer Steuereinheit übertragen werden muß, was mit entsprechenden Problemen verbunden ist. Die Überwachung des Fluiddruckes kann bei dem hier vorliegenden Ausführungsbeispiel jedoch an dem Spindelstock erfolgen, wo die Fluidzufuhr geregelt wird, so daß insgesamt auch eine einfachere Überwachung der Funktion des Werkstückgreifers möglich ist.

Weitere Vorteile ergeben sich aus der Beschreibung und der beigefügten Zeichnung.

Ein Ausführungsbeispiel der Erfindung ist in der beigefügten Zeichnung dargestellt und wird in der nachfolgenden Beschreibung näher erläutert. Es zeigen:
- Fig. 1: eine schematische Gesamtansicht eines Ausführungsbeispieles einer Werkzeugmaschine, bei der der erfindungsgemäße Werkstückgreifer eingesetzt werden kann; und
- Fig. 2: in stark vergrößerter Darstellung einen erfindungsgemäßen Werkstückgreifer, wie er in den Spindelstock der in Fig. 1 gezeigten Werkzeugmaschine eingesetzt werden kann.

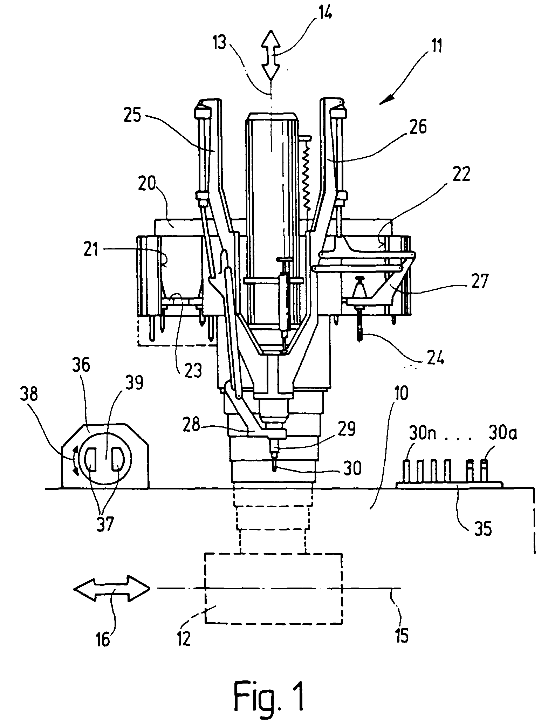

In Fig. 1 ist mit 10 ein Tisch einer Werkzeugmaschine bezeichnet. Die Werkzeugmaschine weist einen Spindelstock 11 auf, der mit einem schematisch angedeuteten Antrieb 12 in einer Hochachse 13 in Richtung eines Doppelpfeiles 14, in einer Längsachse 15 in Richtung eines Doppelpfeiles 16 sowie in einer zu den Achsen 13 und 15 senkrechten Achse verfahrbar ist.

Um den Spindelstock 11 herum ist ein hufeisenförmiges Magazin 20 angeordnet, von dem in der Vorderansicht in Fig. 1 die beiden vorderen Enden zu beiden Seiten des Spindelstocks 11 erkennbar sind. Im Bereich dieser Enden weist das Magazin 20 Öffnungen 21, 22 auf, wobei in der linken Öffnung 21 ein Teil eines endlosen Förderbandes 23 zu erkennen ist. Mit dem Förderband 23 können Werkzeuge 24 entlang einer doppelthufeisenförmigen Bahn im Magazin 20 gefördert werden, so daß sie durch entsprechende Ansteuerung an den Öffnungen 21, 22 zur Entnahme bzw. zum Wiedereinsetzen in das Magazin 20 zur Verfügung stehen.

Am Spindelstock 11 sind ein linker Werkzeugwechsler 25 sowie ein rechter Werkzeugwechsler 26 derart angeordnet, daß Spindelstock 11, Magazin 20 und Werkzeugwechsler 25, 26 gleichermaßen durch den Antrieb 12 verfahren werden. Es ergibt sich somit eine variable Werkzeugwechselebene, durch die die Rüstzeiten beim Werkzeugwechsel vermindert werden.

In Fig. 1 befindet sich der rechte Werkzeugwechsler 26 in seiner Magazinstellung, in der er ein Werkzeug 24 an seiner Greiferhand 27 gerade aus dem Magazin 20 entnommen hat oder dieses einsetzen wird.

Die linke Werkzeugwechselvorrichtung 25 befindet sich in ihrer Arbeitsstellung, in der sie einen Werkstückgreifer 29 hält. Am unteren Ende des Werkstückgreifers 29 ist ein Werkstück 30 zu erkennen.

Rechts auf dem Tisch 10 befindet sich eine Palette 35 mit weiteren Werkstücken 30a...30n. Auf der linken Seite des Spindelstockes 11 befindet sich ein Teilapparat 36 mit einem Backenfutter 37, das in Richtung eines Pfeiles 38 um eine Achse 39 verdrehbar ist, die senkrecht zu der Zeichenebene verläuft.

Die Funktionsweise der insoweit beschriebenen Werkzeugmaschine aus Fig. 1 ist wie folgt:

Bei Inbetriebnahme der Werkzeugmaschine befinden sich beide Werkzeugwechselvorrichtungen 25, 26 in ihren Magazinpositionen und die Palette 35 ist mit unbearbeiteten Werkstücken 30a...30n bestückt.

Das Förderband 23 wird nun so verfahren, daß der Werkstückgreifer 29 von einer der Werkzeugwechselvorrichtungen 25 bzw. 26 entnommen und in die Arbeitsstellung überführt werden kann. Der Werkstückgreifer wird nun in die drehbar an dem Spindelstock 11 gelagerte Spindel eingespannt, woraufhin der Spindelstock 11 so verfahren wird, daß der Werkstückgreifer 29 eines der Werkstücke 30a...30n aus der Palette 35 entnehmen kann. Nach dem Ergreifen des Werkstückes 30 wird dieses zu dem Teilapparat 36 verfahren.

Während dieser Vorgänge hat die andere Werkzeugwechselvorrichtung 26 bzw. 25 das erste benötigte Werkzeug 24 aus dem Magazin 20 entnommen und steht in Magazinstellung bereit. Sobald nun das Werkstück 30 mittels des Werkstückgreifers 29 in das Backenfutter 37 eingesetzt wurde, wird der Werkstückgreifer 29 aus der Spindel ausgespannt und durch gegenläufige Bewegung der Werkzeugwechselvorrichtung 25, 26 durch das Werkzeug 24 ersetzt.

In entsprechender Weise werden nun nacheinander die gewünschten Werkzeuge 24 eingewechselt, bis sämtliche Bearbeitungsvorgänge ausgeführt wurden. Um das Werkzeug 30 nun zu wechseln, wird wieder der Werkstückwechsler in die Spindel eingewechselt und das Werkstück 30 gegen ein neues Werkstück 30 von der Palette 35 ausgewechselt. Diese Vorgänge wiederholen sich zyklisch so lange, bis sämtliche Werkstücke 30a...30n bearbeitet worden sind.

Die insoweit beschriebene Werkzeugmaschine entspricht der aus der eingangs erwähnten DE 36 20 343 C2 beschriebenen Werkzeugmaschine, wobei auf diese Patentschrift bezüglich weiterer Informationen ausdrücklich verwiesen wird.

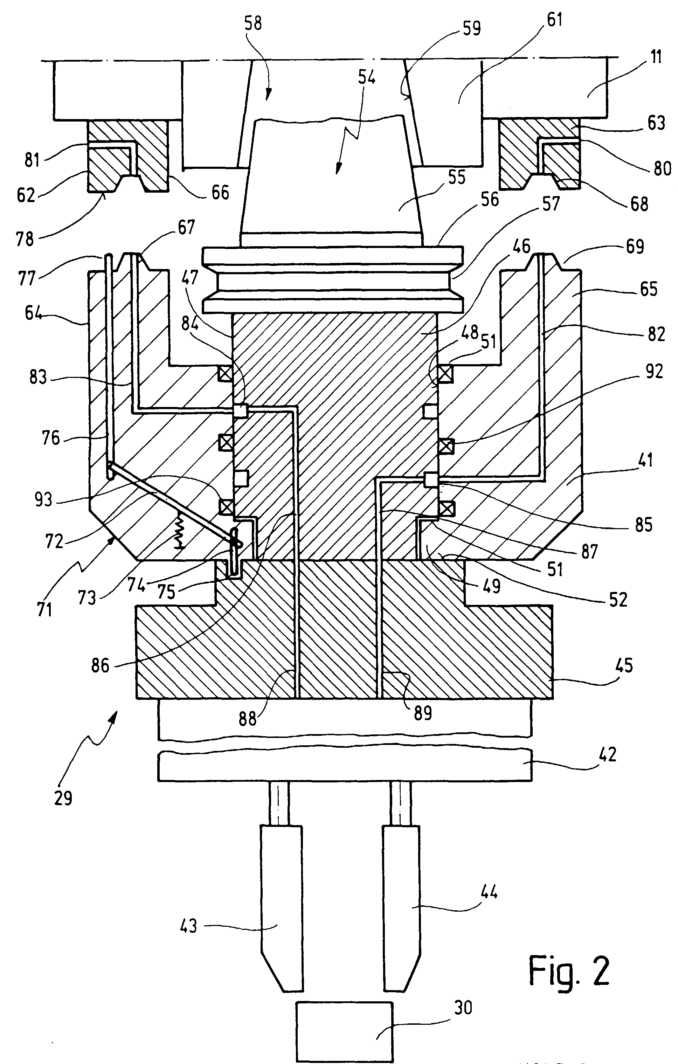

In Fig. 2 ist nun in einem Längsschnitt der neue Werkstückgreifer 29 sowie ausschnittsweise der untere Bereich des Spindelstockes 11 gezeigt. Der neue Werkstückgreifer 29 ermöglicht es, das Werkstück 30 nach dem Ergreifen beliebig zu verdrehen, so daß es in unterschiedlichen Ausrichtungen in den Teilapparat 36 eingespannt werden kann.

Der neue Werkstückgreifer 29 umfaßt ein Gehäuseteil 41, an dem drehbar ein Greiferelement 42 angeordnet ist, das zwei Spannbacken 43 und 44 zum Ergreifen des Werkstückes 30 aufweist. Das Greiferelement 42 ist an einem an dem Gehäuseteil 41 drehbar gelagerten Adapter 45 befestigt, der wiederum an einem Verbindungsteil 46 befestigt ist, das sich nach Art eines Schaftes 47 durch eine zentrische Bohrung 48 in dem Gehäuseteil 41 erstreckt.

Das Gehäuseteil 41 weist an seinem unteren Ende einen Kragen 49 auf, über den es zwischen eine Schulter 51 des Schaftes 47 sowie eine Gleitfläche 52 des Adapters 45 in axialer Richtung unverschiebblich gehalten wird.

An dem von der Schulter 51 abgelegenen oberen Ende ist der Schaft 47 an einem standardisierten Werkzeughalter 54 mit Steilkegel 55 sowie Flansch 56 befestigt. An dem Flansch 56 ist eine Greifernut 57 gezeigt, an der die Werkzeugwechselvorrichtungen 25, 26 mit ihren Greiferhänden 27, 28 angreifen.

Oberhalb des Werkstückgreifers 29 ist schematisch der untere Bereich des Spindelstockes 11 angedeutet, der eine Aufnahme 58 mit einem Innenkonus 59 für den Steilkegel 55 aufweist, wobei diese Aufnahme 58 in einer an dem Spindelstock 11 drehbar gelagerten Spindel 61 vorgesehen ist.

Neben der Spindel 61 sind an dem Spindelstock 11 zwei Verbindungselemente 62, 63 angeordnet, denen Anschlußelemente 64, 65 an dem Gehäuseteil 41 zugeordnet sind. Die Verbindungselemente 62, 63 sowie die Anschlußelemente 64, 65 sind mit Steckteilen 66, 68, 67, 69 versehen, die beim Einsetzen des Werkstückgreifers 29 mit seinem Steilkegel 55 in die Aufnahme 58 miteinander in Eingriff gelangen und das Gehäuseteil 41 drehfest an dem Spindelstock 11 festlegen.

In Fig. 2 links ist zu erkennen, daß in dem Gehäuseteil 41 eine Verriegelungseinheit 71 vorgesehen ist, über die der Adapter 45 drehfest mit dem Gehäuseteil 41 verriegelt werden kann. Die Verriegelungseinheit 71 umfaßt einen Hebel 72, der etwa mittig schwenkbar gelagert ist und an seinem rechten Arm eine Zugfeder 73 sowie einen Stift 74 aufweist, der einem Rastloch 75 in dem Adapter 45 zugeordnet ist.

An seinem linken Arm ist der Hebel 72 mit einem Betätigungsbolzen 76 versehen, dessen oberes Ende 77 aus dem Anschlußelement 64 hervorragt und beim Einsetzen des Werkstückgreifers 49 in die Aufnahme 58 mit einer Anlagefläche 78 an dem Verbindungselement 62 in Anlage gelangt.

Während dieser Einsatzbewegung wird der Betätigungsbolzen 76 in Fig. 2 nach unten gedrückt, so daß der Hebel 72 verschwenkt und dabei den Stift 74 gegen die Kraft der Zugfeder 73 aus dem Rastloch 75 aushebt, so daß nunmehr eine relative Verdrehung zwischen Gehäuseteil 41 sowie Adapter 45 möglich wird.

In dieser Stellung ist der Steilkegel 55 durch eine an sich bekannte Zugstange derart in die Aufnahme 58 hineingezogen, daß er drehfest mit der Spindel 61 verbunden ist. Wegen der drehfesten Festlegung des Gehäusesteiles 41 an dem Spindelstock 11 sowie der Verdrehmöglichkeit zwischen Adapter 45 und Gehäuseteil 41 kann jetzt das Greiferelement 42 durch Verdrehen der Spindel 61 beliebig verdreht werden, während das Gehäuseteil 41 ortsfest bleibt.

Die Spannbacken 43, 44 sind fremdkraftbetätigte Spannbacken, die über ein Fluid betätigt werden, so wie es bspw. in der eingangs erwähnten DE 36 20 343 C2 ausführlich beschrieben ist.

Die Fluidzufuhr erfolgt über Fluidkanäle 80, 81, die in den Verriegelungselementen 63 bzw. 62 an dem Spindelstock 11 vorgesehen sind. Den Fluidkanälen 80, 81 sind Fluidkanäle 82, 83 in den Anschlußelementen 65, 64 zugeordnet. Wenn die Steckteile 66, 67, 68, 69 miteinander in Eingriff sind, gelangt somit Fluid von dem Spindelstock 11 in das Gehäuseteil 41.

Die Fluidkanäle 82 und 83 münden in der Bohrung 48 des Gehäuseteiles 41 auf der Höhe von Ringnuten 84 und 85, die radial außen an dem Schaft 47 vorgesehen sind.

Von diesen Ringnuten 84,85 erstrecken sich weitere Fluidkanäle 86, 87 durch den Schaft 47 hindurch und gelangen schließlich in Fluidverbindung mit Fluidkanälen 88, 89 in dem Adapterteil 45. Diese Fluidkanäle 88, 89 übertragen jetzt Energie zu den Spannbacken 43 und 44, die somit aktiv geöffnet und geschlossen werden können.

Zwischen dem Gehäuseteil 41 sowie dem Schaft 47 sind noch Dichtungen 91, 92, 93 vorgesehen, die die beiden oben beschriebenen Fluidverbindungen gegeneinander und nach außen abdichten.

Abschließend sei noch darauf hingewiesen, daß durch den auf den Steilkegel 55 ausgeübten Zug beim Einziehen in die Aufnahme 58 über die Gleitfläche 52 ein Druck auf das Gehäuseteil 41 ausgeübt wird, wodurch eine feste Anlage zwischen den Steckteilen 66, 67, 68, 69 erfolgt.

Der Übersichtlichkeit wegen ist in Fig. 2 nicht gezeigt, wie das Greiferelement 42 an dem Adapter 45 und dieser an dem Schaft 47 befestigt sind. Diese Befestigung erfolgt z.B. über normale Maschinenschrauben, die in der in Fig. 2 gewählten Darstellung nicht zu erkennen sind. Über diese Schraubverbindung können jetzt verschiedene Greiferelemente 42 an dem drehbaren Adapter 45 befestigt werden. Andererseits ist es auch möglich, an dem neuen Werkstückgreifer 29 unterschiedliche Werkzeughalter 54 zu befestigen, so daß der neue Werkstückgreifer 29 mit verschiedenen Standardbaugruppen zusammenwirken kann.

Lediglich der Vollständigkeit halber sei erwähnt, daß der neue Werkstückgreifer 29 auch bei Werkzeugmaschinen eingesetzt werden kann, die eine größere Anzahl von kreisförmig um den Spindelstock angeordneten Werkzeugwechselvorrichtungen aufweisen, wobei dann kein gesondertes Werkzeugmagazin erforderlich ist. Die Werkzeugwechselvorrichtungen halten vielmehr die Werkzeuge sowie ggf. den neuen Werkstückgreifer ständig in ihren Greiferhänden, wobei sich im Betrieb bis auf eine sämtliche Werkzeugwechselvorrichtungen in ihrer Magazinstellung befinden.

## Patentansprüche

1. Werkstückgreifer mit einem Gehäuseteil (41), an dem ein fremdkraftbetätigtes Greiferelement (42) zum Ergreifen von Werkstücken (30) angeordnet ist, und einem Verbindungsteil (46) zur Befestigung des Werkstückgreifers (29) an einem Werkzeughalter (54), der mittels einer Werkzeugwechselvorrichtung (25, 26) zwischen einer Magazinstellung an einer Werkzeugmaschine und einer Arbeitsstellung an einer Aufnahme (58) in einer in einem Spindelstock (11) drehbar gelagerten Spindel (61) der Werkzeugmaschine überführbar ist, wobei an dem Gehäuseteil (41) ein Anschlußelement (64, 65) vorgesehen ist, das bei in der Aufnahme (58) befindlichem Werkzeughalter (54) mit einem an dem Spindelstock (11) vorgesehenen Verbindungselement (62, 63) zum Zuführen von Energie zur Betätigung des Greiferelementes (42) derart in Eingriff ist, daß das Gehäuseteil (41) gegenüber dem Spindelstock (11) drehfest gehalten ist,
dadurch gekennzeichnet, daß ein an dem Gehäuseteil (41) drehbar gelagerter Adapter (45) vorgesehen ist, an dem das Greiferelement (42) befestigbar ist.

2. Werkstückgreifer nach Anspruch 1, dadurch gekennzeichnet, daß über das Verbindungselement (62, 63) Energie zur Drehung des Adapters (45) zugeführt wird.

3. Werkstückgreifer nach Anspruch 1, dadurch gekennzeichnet, daß das Verbindungsteil (46) gegenüber dem Gehäuseteil (41) drehbar gelagert ist und an seinem einen Ende den Adapter (45) zur Befestigung des Greiferelementes (42) trägt.

4. Werkstückgreifer nach einem der Ansprüche 1 bis 3, dadurch gekennzeichnet, daß der Adapter (45) zur Aufnahme unterschiedlicher Greiferelemente (42) ausgebildet ist.

5. Werkstückgreifer nach einem der Ansprüche 1 bis 4, dadurch gekennzeichnet, daß das Gehäuseteil (41) in Längsrichtung an dem Verbindungsteil (46) im wesentlichen unverschieblich festgelegt ist.

6. Werkstückgreifer nach Anspruch 3 oder Anspruch 3 und einem der Ansprüche 4 oder 5, dadurch gekennzeichnet, daß der Adapter (45) über eine Gleitfläche (52) mit dem Gehäuseteil (41) in Anlage ist und über die Gleitfläche (52) das Gehäuseteil (41) auf den Spindelstock (11) zu drückt, wenn der Werkzeughalter (54) in die Aufnahme (58) eingezogen ist.

7. Werkstückgreifer nach einem der Ansprüche 1 bis 6, dadurch gekennzeichnet, daß eine Verriegelungseinheit (71) vorgesehen ist, über die der Adapter (45) drehfest mit dem Gehäuseteil (41) koppelbar ist.

8. Werkstückgreifer nach Anspruch 7, dadurch gekennzeichnet, daß die Verriegelungseinheit (71) automatisch entriegelt, wenn der Werkzeughalter (54) in die Aufnahme (58) eingezogen wird.

9. Werkstückgreifer nach Anspruch 8, dadurch gekennzeichnet, daß die Verriegelungseinheit (71) einen federbelasteten Stift (74) umfaßt, der im verriegelten Zustand in ein entsprechendes Rastloch (75) an dem Adapter (45) eingreift, und daß ein Hebelmechanismus (72) zum Verstellen des Stiftes (74) vorgesehen ist, wobei der Hebelmechanismus (72) mit einem Betätigungsbolzen (76) zusammenwirkt, der aus dem Gehäuseteil (41) hervorragt und mit dem Spindelstock (11) in Anlage ist, wenn der Werkstückgreifer (29) sich in seiner Arbeitsstellung befindet.

10. Werkstückgreifer nach einem der Ansprüche 3 bis 9, dadurch gekennzeichnet, daß das Verbindungsteil (46) als Schaft (47) ausgebildet ist, der in einer zentrischen Bohrung (48) des Gehäuseteiles (41) gelagert ist, daß in dem Anschlußelement (64, 65) zumindest ein Fluidkanal (82, 83) vorgesehen ist, der seitlich in die Bohrung (48) mündet, um daß in dem Schaft (47) ein zugeordneter Fluidkanal (86, 87) vorgesehen ist, der einen Endes in den Adapter (45) führt und anderen Endes in eine an dem Schaft (47) vorgesehene Ringnut (84, 85) mündet, die dem Fluidkanal (82, 83) in dem Gehäuseteil (41) zugeordnet ist.

11. Werkstückgreifer nach einem der Ansprüche 1 bis 10, dadurch gekennzeichnet, daß an dem Gehäuseteil (41) ein weiteres Anschlußelement (65, 64) angeordnet ist, das einem weiteren, an dem Spindelstock (11) vorgesehenen Verbindungselement (63, 62) zum Zuführen von Energie zugeordnet ist.

12. Werkstückgreifer nach den Ansprüchen 10 und 11, dadurch gekennzeichnet, daß in dem Anschlußelement (65, 64) zumindest ein weiterer Fluidkanal (83, 84) vorgesehen ist, der seitlich in die Bohrung (48) mündet, und daß in dem Schaft (47) ein zugeordneter weiterer Fluidkanal (87, 86) vorgesehen ist, der einen Endes in den Adapter (45) führt und anderen Endes in eine an dem Schaft (47) vorgesehene weitere Ringnut (84, 85) mündet, die dem weiteren Fluidkanal (83, 84) in dem Gehäuseteil (41) zugeordnet ist.

## Claims

1. A workpiece gripper having a housing part (41), a gripper element (42) for gripping workpieces (30) and being actuated by external force being arranged on said housing part, and a joining part (46) for attaching the workpiece gripper (29) to a tool holder (54) that is transferable by means of a tool changing device (25, 26) between a magazine position at a machine tool and a working position at a receptacle (58) in a spindle (61) of the machine tool mounted rotatably in a spindle head (11), whereby at the housing part (41) a connecting element (64, 65) is provided that, when a tool holder (54) is in the receptacle (58), in such a way is in engagement with a joining element (62,63) provided at the spindle head (11) to deliver energy for actuation of the gripper element (42) that the housing part (41) is held non-rotatably with respect to the spindle head (11),
characterized in that there is provided an adapter (45) that is rotatably mounted on the housing part (41) and to which the gripper element (42) can be attached.

2. The workpiece gripper of claim 1, characterized in that energy for rotation of the adapter (45) is delivered via the joining element (62, 63).

3. The workpiece gripper of claim 1, characterized in that the joining part (46) is mounted rotatably with respect to the housing part (41) and carries at one of its ends the adapter (45) for attaching the gripper element (42).

4. The workpiece gripper of any of claims 1 - 3, characterized in that the adapter (45) is configured to receive different gripper elements (42).

5. The workpiece gripper of any of claims 1 - 4, characterized in that the housing part (41) is retained on the joining part (46) substantially non-displaceably in longitudinal direction.

6. The workpiece gripper of claim 3 or of claim 3 and any of claims 4 or 5, characterized in that the adapter (45) rests against the housing part (41) via a sliding surface (52) and presses the housing part (41) via the sliding surface (52) toward the spindle head (11) when the tool holder (54) is being drawn in the receptacle (58).

7. The workpiece gripper of any of claims 1 - 6, characterized in that a locking device (71) is provided by means of which the adapter (45) can be coupled non-rotatably to the housing part (41).

8. The workpiece gripper of claim 7, characterized in that the locking device (71) unlocks automatically when the tool holder (54) is being drawn into the receptacle (58).

9. The workpiece gripper of claim 8, characterized in that the locking device (71) comprises a spring-loaded pin (74) which engages in the locked state into a corresponding snap-in hole (75) on the adapter (45), and that a lever mechanism (72) is provided in order to adjust the pin (74), whereby the lever mechanism (72) coacts with an actuation stud (76) which projects out of the housing part (41) and rests against the spindle head (11) when the workpiece gripper (29) is in its working position.

10. The workpiece gripper of any of claims 3 - 9, characterized in that the joining part (46) is configured as a shaft (47) that is mounted in a centered orifice (48) of the housing part (41), that in the connecting element (64, 65) at least one fluid conduit (82, 83) is provided that opens into the side of the orifice (48), and that in the shaft (47) an associated fluid channel (86, 87) is provided which at one end leads into the adapter (45) and at the other end opens into an annular groove (84, 85) provided on the shaft (47), the annular groove being associated with the fluid channel (82, 83) in the housing part (41).

11. The workpiece gripper of any of claims 1 - 10, characterized in that at the housing part (41) a further connecting element (65, 64) is arranged that is associated with a further joining element (63, 62) for delivering energy, and the further joining element being provided at the spindle head (11).

12. The workpiece gripper of claims 10 and 11, characterized in that in the connecting element (65, 64) at least a further fluid channel (83, 84) is provided which opens laterally into the orifice (48), and that in the shaft (47) there is provided an associated further fluid channel (87, 86) which at one end leads into the adapter (45) and opens at the other end into a further annular groove (84, 85), provided on the shaft (47), which is associated with the further fluid channel (83, 84) in the housing part (41).

## Revendications

1. Griffe pour pièces à usiner comportant une partie (41) formant boîtier sur laquelle est disposé un élément (42) de la griffe actionné par une force extérieure et destiné à saisir des pièces à usiner (30), ainsi qu'une partie de liaison (46) pour la fixation de la griffe (29) à un porte-outils (54), lequel peut être transféré, au moyen d'un dispositif de changement d'outil (25, 26) entre une position de magasin sur une machine-outil et une position de travail sur un logement (58) dans une broche (61) de la machine-outil, montée tournante dans une poupée porte-broche (11), sur la partie (41) formant boîtier étant prévu un élément de raccordement (64, 65) qui, lorsque le porte-outils (54) se trouve dans le logement (58), est en prise avec un élément de liaison (62, 63) prévu sur la poupée porte-broche (11), pour l'apport d'énergie en vue de l'actionnement de l'élément (42) de la griffe, de manière que la partie (41) formant boîtier soit maintenue fixe en rotation par rapport à la poupée porte-broche (11),
caractérisée en ce qu'il est prévu un adaptateur (45) qui est monté tournant sur la partie (41) formant boîtier et qui peut être fixé à l'élément (42) de la griffe.

2. Griffe pour pièces à usiner selon la revendication 1, caractérisée en ce que de l'énergie est apportée par l'intermédiaire de l'élément de liaison (62, 63) en vue de la rotation de l'adaptateur (45).

3. Griffe pour pièces à usiner selon la revendication 1, caractérisée en ce que la partie de liaison (46) est montée tournante par rapport à la partie (41) formant boîtier et porte, à l'une de ses extrémités, l'adaptateur (45) pour la fixation de l'élément (42) de la griffe.

4. Griffe pour pièces à usiner selon l'une des revendications 1 à 3, caractérisée en ce que l'adaptateur (45) est conçu pour recevoir différents éléments (42).

5. Griffe pour pièces à usiner selon l'une des revendications 1 à 4, caractérisée en ce que la partie (41) formant boîtier est fixée de manière à ne pouvoir sensiblement pas se déplacer dans la direction longitudinale sur la partie de liaison (46).

6. Griffe pour pièces à usiner selon la revendication 3 ou selon la revendication 3 et l'une des revendications 4 ou 5, caractérisée en ce que l'adaptateur (45) est en contact, par une surface de glissement (52), avec la partie (41) formant boîtier et presse, par l'intermédiaire de la surface de glissement (52), la partie (41) formant boîtier sur la poupée porte-broche (11), lorsque le porte-outils (54) est introduit dans le logement (58).

7. Griffe pour pièces à usiner selon l'une des revendications 1 à 6, caractérisée en ce qu'il est prévu une unité de verrouillage (71) par laquelle l'adaptateur (45) peut être accouplé solidairement en rotation avec la partie (41) formant boîtier.

8. Griffe pour pièces à usiner selon la revendication 7, caractérisée en ce que l'unité de verrouillage (71) est déverrouillée automatiquement lorsque le porte-outils (54) est introduit dans le logement (58).

9. Griffe pour pièces à usiner selon la revendication 8, caractérisée en ce que l'unité de verrouillage (71) comprend une cheville (74) soumise à l'action d'un ressort, qui, à l'état verrouillé, s'engage dans un trou d'encliquetage (75) correspondant de l'adaptateur (45), et en ce qu'il est prévu un mécanisme à levier (72) pour le déplacement de la cheville (74), le mécanisme à levier (72) coopérant avec un doigt d'actionnement (76) qui ressort de la partie (41) formant boîtier et qui est en contact avec la poupée porte-broche (11), lorsque la griffe (29) se trouve dans sa position de travail.

10. Griffe pour pièces à usiner selon l'une des revendications 3 à 9, caractérisée en ce que la partie de liaison (46) est réalisée sous la forme d'une tige (47) qui est montée dans un perçage (48) centré de la partie (41) formant boîtier, en ce que dans l'élément de raccordement (64, 65) est prévu au moins un canal de fluide (82, 83) qui débouche dans le perçage (48) et en ce que dans la tige (47) est prévu un canal de fluide (86, 87) correspondant qui à une extrémité mène à l'adaptateur (45) et à l'autre extrémité débouche dans une rainure annulaire (84, 85) prévue sur la tige (47), laquelle rainure est affectée au canal de fluide (82, 83) dans la partie (41) formant boîtier.

11. Griffe pour pièces à usiner selon lune des revendications 1 à 10, caractérisée en ce que sur la partie (41) formant boîtier, est disposé un autre élément de raccordement (65, 64) qui es affecté à un autre élément de liaison (63, 62) prévu sur la poupée porte-broche (11), pour l'apport d'énergie.

12. Griffe pour pièces à usiner selon les revendications 10 et 11, caractérisée en ce que dans l'élément de raccordement (65, 64) est prévu au moins un autre canal de fluide (83, 84) qui débouche latéralement dans le perçage 48, et en ce que dans la tige (47) est prévu un autre canal de fluide (87, 86) correspondant qui à une extrémité mène à l'adaptateur (45) et à l'autre extrémité débouche dans une autre rainure annulaire (84, 85) prévue sur la tige (47), laquelle rainure est affectée à l'autre canal de fluide (83, 84) dans la partie (41) formant boîtier.
